# FASCICULE DE BREVET EUROPEEN

(11) **EP 1 119 094 B1**
(45) Date de publication et mention de la délivrance du brevet: **03.12.2008**
(21) Numéro de dépôt: 00403505.1
(22) Date de dépôt: 13.12.2000
(51) Int. Cl.: H02M 5/257, H02M 5/293, H05B 39/04

(54) **Procédé et dispositif d'alimentation électrique d'une charge par un variateur à au moins un interrupteur commandé**
Verfahren und Vorrichtung zur Elektrizitätsversorgung einer Last die aus einem Dimmer mit zumindest einem kontrollierten Schalter besteht
Method and device for the supply of electrical energy to a load comprising a dimmer with at least one controlled switch

(30) Priorité: 14.12.1999 FR 9915787
(43) Date de publication de la demande: 25.07.2001
(73) Titulaire: LEGRAND FRANCE, 87000 Limoges (FR); LEGRAND SNC, 87000 Limoges (FR)
(72) Inventeur: Leblanc, Didier, 87100 Limoges (FR)
(74) Mandataire: Santarelli

(56) Documents cités:
- EP-A- 0 588 273
- EP-A- 0 618 667
- EP-A- 0 923 274
- US-A- 5 239 255

## Description

L'invention se rapporte à un dispositif d'alimentation électrique d'une charge comprenant par exemple une ou plusieurs lampes d'éclairage, par un variateur à interrupteur(s) commandé(s) pouvant fonctionner selon l'un ou l'autre de deux modes de fonctionnement possibles ci-après désignés mode "ouverture de phase" et mode "fermeture de phase".

L'invention concerne également un dispositif d'alimentation d'une telle charge susceptible de mettre en oeuvre le procédé.

Dans le domaine de l'alimentation électrique par variateur à découpage, le mode de fonctionnement du variateur doit être adapté au type de charge, selon que celle-ci a un comportement inductif ou capacitif. Ce problème se rencontre de plus en plus fréquemment, y compris dans le domaine de l'éclairage où on utilise de plus en plus des lampes halogènes basse tension. Le transformateur réducteur de tension qui alimente la lampe peut être, selon les installations, un transformateur classique à enroulements, c'est-à-dire un transformateur formé du couplage de deux self-inductions ou bien un transformateur dit "électronique" dont le comportement est plutôt de type capacitif. Si on veut commander une ou plusieurs lampes halogènes basse tension munies d'un tel transformateur, en y ajoutant un variateur inséré entre le réseau de distribution de courant alternatif et le ou les "transformateurs" assurant la transformation basse tension, il est nécessaire d'adapter le fonctionnement du variateur au type de charge, notamment à son comportement inductif ou capacitif.

Plus précisément, une charge à comportement capacitif ou résistif devra être alimenté par un variateur pouvant fonctionner en mode "ouverture de phase". Dans ce cas, les interrupteurs à semi-conducteurs, qui sont du type commandable à la fermeture comme à l'ouverture, sont fermés pour laisser passer le courant dans la charge dès le début d'une demi alternance de la tension du réseau et sont ouverts, après un certain temps dépendant du niveau d'éclairage souhaité, avant la fin de ladite demi alternance.

Au contraire, une charge à comportement selfique nécessite d'être alimentée par un variateur fonctionnant en mode "fermeture de phase". Dans ce mode, les interrupteurs commandés du variateur ne sont pas fermés au début de chaque demi alternance de la tension du réseau mais à un instant donné de la durée de celle-ci et jusqu'à la fin de ladite demi alternance.

Une charge purement résistive peut être alimentée par un variateur fonctionnant selon l'un ou l'autre mode, indifféremment.

La possibilité de passer d'un mode de fonctionnement à un autre nécessite l'utilisation, dans la conception du variateur, de transistors bipolaires, de transistors de puissance à effet de champ, ou encore, de transistors connus sous la dénomination IGBT (transistor bipolaire à grille isolée), cette liste n'étant pas limitative. En revanche, les thyristors et/ou triacs ne permettent pas le fonctionnement en "ouverture de phase".

Plusieurs solutions ont déjà été proposées pour résoudre le problème évoqué ci-dessus.

Le document EP 0 618 667 décrit un système d'alimentation d'une charge à interrupteurs commandés pouvant fonctionner (selon un mode de synchronisation sélectionné) selon l'un ou l'autre de deux modes de fonctionnement possibles, à savoir un mode "ouverture de phase" et un mode "fermeture de phase".

Pour choisir le bon mode de fonctionnement qui dépend de la nature de la charge, laquelle n'est pas toujours connue de l'utilisateur, il est prévu d'analyser préalablement la charge pour savoir si le variateur doit être configuré pour un fonctionnement en mode "ouverture de phase" si la charge est de comportement capacitif ou résistif ou s'il doit être configuré en mode "fermeture de phase" si son comportement est selfique. Selon l'enseignement de ce document, on applique, au cours d'un programme de test indépendant des conditions d'alimentation normale de la charge une impulsion de commande à ladite charge et, en fonction de la réaction de celle-ci, on en déduit la nature (selfique ou capacitive) de ladite charge. Puis on positionne le système d'alimentation dans le mode de fonctionnement souhaitable, par une configuration particulière de la synchronisation des interrupteurs. Ensuite seulement, on connecte effectivement la charge au variateur pour que celle-ci soit alimentée normalement dans le mode de fonctionnement choisi.

Le document WO-A-92/15052 décrit un dispositif dans lequel on commence par alimenter la charge normalement en plaçant le variateur a priori, dans le mode "ouverture de phase". Si des surtensions apparaissent aux bornes de la charge, on commute le mode de fonctionnement. Cependant, avec un tel système, la détection de surtension a lieu à n'importe quel régime de fonctionnement. Des pointes de tension importantes peuvent endommager les circuits avant que le changement de mode de fonctionnement n'ait pu se faire. L'invention permet de résoudre ce type de problème.

L'invention concerne un procédé d'alimentation d'une charge par un variateur à au moins un interrupteur commandé, pouvant fonctionner selon l'un ou l'autre de deux modes de fonctionnement dits mode "ouverture de phase" et mode "fermeture de phase" , caractérisé en ce que, pendant une mise en service, on place ledit variateur en mode "ouverture de phase", on alimente la charge par ledit variateur en le commandant pour qu'il fonctionne à un régime bas prédéterminé, puis, lorsque ledit régime bas est établi, on surveille l'apparition éventuelle de surtensions pendant un intervalle de temps donné et on pilote ledit variateur pour qu'il passe en mode de fonctionnement à fermeture de phase si un taux excessif de surtensions a été détecté pendant ledit intervalle de temps prédéterminé.

L'apparition de surtensions est "surveillée" de préférence, aux bornes du ou des interrupteurs commandés. On pourrait aussi procéder en détectant les surtensions aux bornes de la charge.

Selon une caractéristique avantageuse, la décision de changer ou non le mode de fonctionnement est prise en tenant compte du dénombrement des surtensions survenues pendant l'intervalle de temps prédéterminé précité. Si le nombre de surtensions pendant cet intervalle de temps est supérieur à un nombre donné, le variateur passe automatiquement en mode "fermeture de phase". Ce changement de mode de fonctionnement se fait, de façon connue en soi, par une modification de la synchronisation des interrupteurs commandés du variateur. Plus précisément, lorsque le variateur opère en mode "ouverture de phase" on utilise une synchronisation des interrupteurs commandés par rapport au zéro de la tension secteur tandis que, lorsque le variateur fonctionne en mode "fermeture de phase" on utilise une synchronisation des interrupteurs commandés par rapport au zéro de courant circulant dans la charge. Pour les charges purement résistives, les deux modes de commande sont compatibles. On pourra simplement maintenir le variateur en mode ouverture de phase.

Selon un mode de réalisation possible, on passe en mode de fonctionnement à "fermeture de phase" lorsque le nombre de surtensions est au moins égal à un pourcentage donné du nombre de demi périodes de la tension réseau pendant ledit intervalle de temps prédéterminé. Par exemple, ce pourcentage peut être fixé aux environs de 50 %.

Selon une autre caractéristique avantageuse de l'invention, chaque fois que l'on pilote le variateur pour que celui-ci atteigne ledit régime bas prédéterminé, on augmente progressivement le temps de conduction des interrupteurs jusqu'à ce que ledit variateur fonctionne audit régime bas prédéterminé. Par exemple, cette phase de démarrage progressif (qui précède la phase d'analyse proprement dite pendant laquelle le fonctionnement est stabilisé audit régime bas), peut durer environ 500 millisecondes. Au cours de cette phase de démarrage progressif, le temps de conduction des interrupteurs commandés pendant une demi période de la tension du réseau varie progressivement, d'une valeur très faible jusqu'à 2 millisecondes. Lorsque le temps de conduction est stabilisé à 2 millisecondes par demi période en mode "ouverture de phase", on considère que le variateur est stabilisé audit régime bas prédéterminé. C'est alors que commence la surveillance de l'apparition éventuelle de surtensions aux bornes de la charge. Cette surveillance peut être exercée, par exemple, pendant un intervalle de temps de l'ordre de 200 millisecondes. Si un taux excessif de surtensions est détecté pendant cet intervalle de temps, un ordre de changement de mode de fonctionnement est élaboré par un microprocesseur et le variateur passe en mode "fermeture de phase".

En revanche, si, à l'issue de la surveillance des surtensions au régime bas prédéterminé précité, le nombre de surtensions détecté est insuffisant pour avoir donné lieu à un changement de mode de fonctionnement, il est avantageux d'augmenter le temps de conduction des interrupteurs commandés d'une valeur prédéterminée jusqu'à atteindre un nouveau régime prédéterminé établi et de recommencer à surveiller, à ce nouveau régime, l'apparition éventuelle de surtensions aux bornes de la charge pendant un nouvel intervalle de temps donné. Si le taux de surtensions dans ces conditions de fonctionnement dépasse une valeur prédéterminée, alors le microprocesseur pilote les moyens de synchronisation pour que le variateur fonctionne en mode "fermeture de phase". En fait, les changements de régime du variateur se succèdent (en augmentant le régime à chaque palier) et, pour chaque palier dans un même régime de fonctionnement donné, on renouvelle la phase de surveillance de l'apparition éventuelle de surtensions. Si à l'occasion d'une phase de surveillance, le taux de surtensions excède une valeur prescrite correspondante, on passe en mode de fonctionnement à "fermeture de phase". Tant que le variateur est maintenu en mode de fonctionnement à "ouverture de phase", les changements de régime du variateur se succèdent jusqu'à ce que le temps de conduction des interrupteurs commandés atteigne une valeur donnée. Par exemple, ce temps de conduction peut être choisi voisin de 90° en phase, de la période de la tension du réseau de distribution de courant alternatif. Lorsqu'on atteint le dernier palier correspondant à ce régime, sans que des surtensions excessives aient été détectées, alors le variateur est maintenu en mode de fonctionnement à "ouverture de phase".

Avantageusement, on peut mémoriser une information représentative d'un mode de fonctionnement sélectionné correspondant à une charge particulière, de sorte qu'il devient possible de sélectionner directement ce mode de fonctionnement à chaque nouvelle mise en service du variateur connecté à cette même charge particulière, sans avoir à renouveler les opérations indiquées ci-dessus.

De préférence, chaque nouvelle mise en service du variateur s'opère par la mise en oeuvre d'une phase de démarrage progressif comme indiqué ci-dessus.

L'invention concerne également un dispositif d'alimentation d'une charge comprenant un variateur à au moins un interrupteur commandé blocable par exemple à transistors, des moyens de sélection d'un mode de fonctionnement dit "ouverture de phase" ou "fermeture de phase" dudit variateur et un détecteur de surtensions, caractérisé en ce qu'il comporte des moyens de commande du variateur pour le placer à un régime bas prédéterminé en mode "ouverture de phase", des moyens d'analyse de surtensions reliés audit détecteur de surtensions et des moyens de commande de changement de mode de fonctionnement dudit variateur. Ces moyens de commande sont pilotés par des informations élaborées par lesdits moyens d'analyse. Le détecteur de surtensions est de préférence connecté aux bornes du ou des interrupteurs commandés. Il pourrait être connecté aux bornes de la charge.

Comme indiqué ci-dessus, les moyens d'analyse de surtensions comportent avantageusement des moyens de comptage de telles surtensions.

Le dispositif comporte également avantageusement une mémoire dans laquelle on enregistre une information représentative d'un mode de fonctionnement adapté à la nature de la charge connectée audit dispositif d'alimentation.

L'invention sera mieux comprise et d'autres avantages de celle-ci apparaîtront plus clairement à la lumière de la description qui va suivre, d'un dispositif d'alimentation d'une charge conforme à son principe, donnée uniquement à titre d'exemple et faite en référence aux dessins annexés dans lesquels :
- la figure 1 est un schéma-bloc du dispositif d'alimentation connecté à une charge ; et
- la figure 2 est un organigramme explicitant son fonctionnement.

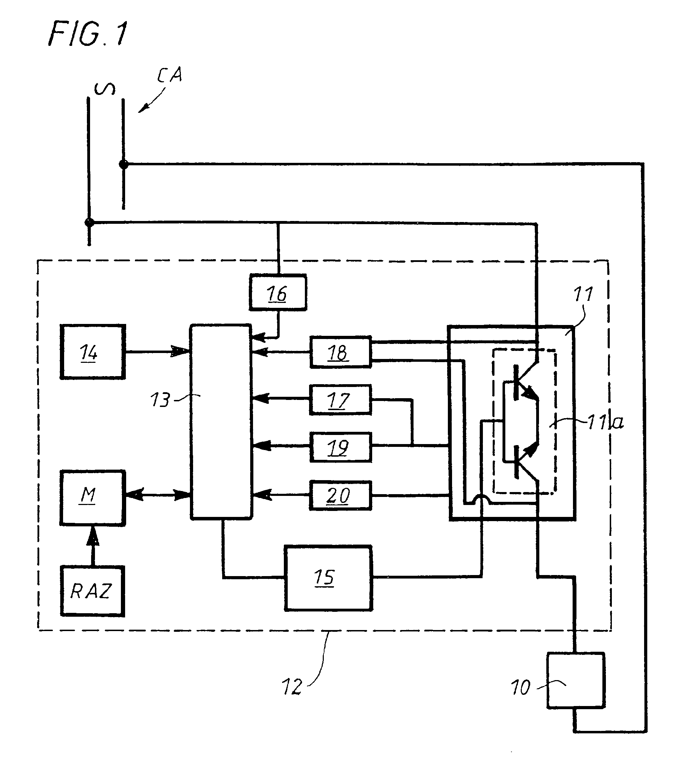

En considérant plus particulièrement la figure 1, on a représenté une charge 10 connectée au réseau de distribution de courant alternatif CA par l'intermédiaire de l'étage de puissance 11 d'un variateur 12 à interrupteurs commandés. Plus précisément, l'étage de puissance 11 comporte au moins un circuit 11 a à transistor(s) capable d'effectuer un "découpage" de la tension alternative délivrée par le réseau. Généralement, l'étage de puissance 11 comporte deux interrupteurs commandés de ce genre, permettant de "découper" les demi alternances positives et négatives, respectivement. Un tel étage de puissance 11 peut par exemple comporter deux transistors IGBT, son principe est connu et il ne sera pas décrit plus en détails. Le variateur comporte en outre un microprocesseur 13 qui est ici piloté par un modem 14. Le microprocesseur pilote un circuit de synchronisation 15, lequel sélectionne et contrôle le mode de fonctionnement de l'étage de puissance 11. En "ouverture de phase", l'étage de puissance 11 est synchronisé par rapport au zéro de la tension du réseau de distribution du courant électrique tandis que, en "fermeture de phase" l'étage de puissance 11 est synchronisé par rapport au zéro du courant circulant dans la charge 10. Ce type de synchronisation permettant de passer d'un mode de fonctionnement à l'autre est connu en soi.

On suppose que le comportement de la charge 10 est inconnu de l'utilisateur. Le comportement peut être capacitif ou selfique ou purement résistif. C'est pourquoi le variateur comporte un certain nombre de circuits de détection susceptibles d'élaborer des informations analysées par le microprocesseur 13. On distingue ainsi un détecteur 16 du passage à zéro de la tension du réseau, un détecteur 17 du passage à zéro du courant dans la charge, un détecteur de surtensions 18 connecté en dérivation aux bornes du circuit 11a de transistors, un détecteur de court-circuit 19 et un détecteur de température 20. En outre, le microprocesseur 13 est relié à une mémoire M dans laquelle on peut enregistrer une information représentative d'un mode de fonctionnement adapté à la nature de la charge 10. Le microprocesseur 13 peut par exemple être programmé pour effacer la mémoire M chaque fois que la charge 10 est déconnectée du variateur 12. En revanche, le microprocesseur 13 inscrit dans la mémoire M une information représentative de la nature de la charge (selfique ou capacitive) lorsque celle-ci est connue. Les détecteurs 16 et 17 fournissent des informations au microprocesseur 13 permettant à ce dernier de piloter le circuit de synchronisation 15 dans l'un ou l'autre des modes de fonctionnement mentionnés ci-dessus. Le détecteur de surtensions 18 fournit une information au microprocesseur 13 chaque fois qu'une surtension est détectée aux bornes du ou des interrupteurs commandés. Dans cet exemple, le microprocesseur 13 est programmé pour compter le nombre de surtensions pendant une phase de surveillance définie ci-dessus. Par conséquent, les moyens d'analyse de surtensions comportent le détecteur de surtensions 18 associé à la charge et des moyens de comptage de telles surtensions, constitués par le microprocesseur lui-même. Les moyens de commande du changement de mode de fonctionnement de l'étage de puissance 11 sont constitués par le microprocesseur 13 et le circuit de synchronisation 15.

Le circuit 19 permet de détecter un court-circuit de la charge et le circuit 20 permet de détecter un échauffement anormal de l'étage de puissance 11. Les signaux délivrés par ces deux détecteurs sont exploités par le microprocesseur pour, par exemple, arrêter automatiquement l'alimentation de la charge et élaborer l'émission d'un signal d'alarme.

Des moyens d'effacement volontaire RAZ de la mémoire M sont prévus. Ainsi, l'utilisateur, en appuyant sur un bouton poussoir peut, à la mise sous tension o u après une alarme, effacer la mémoire M et réinitialiser une mise en service avec surveillance de l'apparition éventuelle de surtensions et contrôle du mode de fonctionnement approprié.

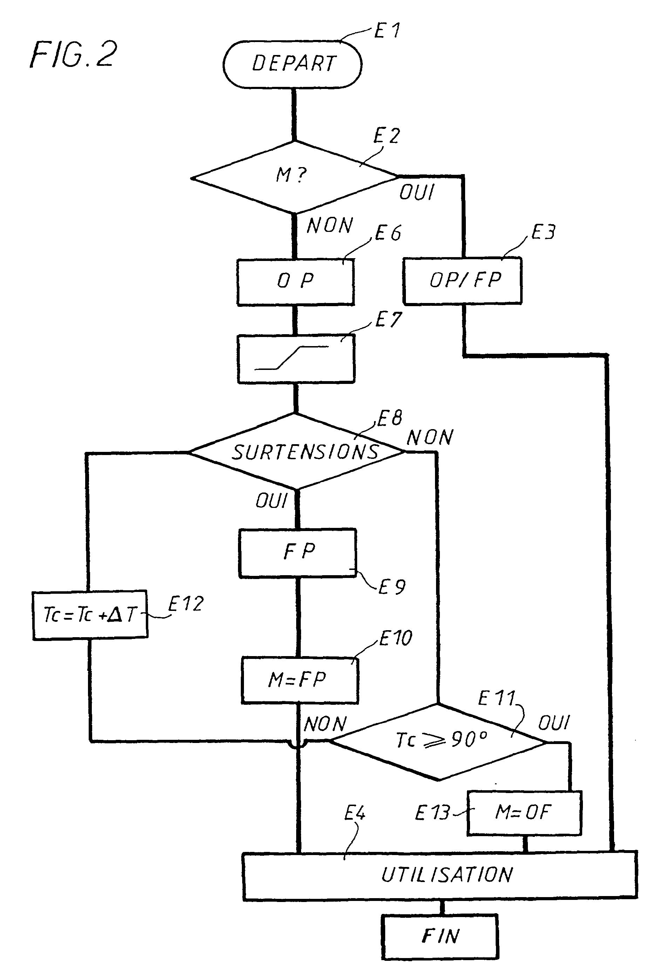

On va maintenir décrire en référence à la figure 2 le fonctionnement du dispositif d'alimentation qui vient d'être décrit. L'étape E1 est une phase d'initialisation du système. On suppose que la charge est connectée au dispositif et qu'une mise en service de celle-ci est demandée.

L'étape E2 est un test au cours duquel le microprocesseur vérifie si une information représentative de la nature de la charge 10 est inscrite dans la mémoire M. Si la réponse est oui, on passe à l'étape E3 où le circuit de synchronisation 15 est immédiatement piloté par le microprocesseur 13 pour fonctionner soit en "ouverture de phase", soit en "fermeture de phase" selon l'information inscrite dans la mémoire M.

On passe ensuite à l'étape E4 où la charge peut être alimentée à un autre régime choisi par l'utilisateur. Les instructions de commande de l'utilisateur sont transmises au microprocesseur 13 via le modem 14. La mise en service commence par une montée en régime progressif jusqu'à un régime de fonctionnement bas prédéterminé. Puis le régime choisi est établi. Si, au cours du fonctionnement on détecte des surtensions ou un échauffement anormal ou un court-circuit, le système est arrêté automatiquement et une alarme est déclenchée.

Si la réponse au test E2 est négative, on passe à l'étape E6 où l'étage de puissance du variateur est piloté, via le circuit de synchronisation 15, pour fonctionner en "ouverture de phase".

A l'étape E7, on alimente progressivement l'étage de puissance jusqu'à un régime de fonctionnement bas prédéterminé. Comme indiqué ci-dessus, ce régime de fonctionnement bas est obtenu en augmentant progressivement le temps de fermeture des interrupteurs commandés de l'étage de puissance 11.

On passe ensuite à l'étape E8 qui est un test où l'on surveille, pendant une période de temps prédéterminée, l'apparition éventuelle de surtensions aux bornes de la charge ; c'est le rôle du détecteur 18. Le microprocesseur 13 compte ces surtensions et détermine si le taux de surtensions est excessif.

Si la réponse est oui, on passe à l'étape E9 où l'étage de puissance 11 est piloté pour fonctionner en mode "fermeture de phase".

On passe ensuite à l'étape E10 où on inscrit une information représentative du mode de fonctionnement "fermeture de phase" dans la mémoire M. Puis on passe à l'étape E4.

Si la réponse au test E8 est négative, on passe à l'étape E11 qui est un test où l'on vérifie si le temps de conduction des transistors IGBT de l'étage de puissance 11 est supérieur ou égal à 90°, en phase, de l'alternance de la tension du réseau de distribution de courant alternatif.

Si la réponse est non, on passe à l'étape E12 où on incrémente le temps de conduction Tc d'une valeur prédéterminée ΔT pour changer le régime du variateur et on retourne à l'étape E8.

Si la réponse au test E11 est positive, on passe à l'étape E13 qui consiste à inscrire dans la mémoire M une information représentative du mode de fonctionnement "ouverture de phase".

On passe ensuite à l'étape E4 décrite précédemment.

## Revendications

1. Procédé d'alimentation d'une charge par un variateur à au moins un interrupteur commandé pouvant fonctionner selon l'un ou l'autre de deux modes de fonctionnement dits mode "ouverture de phase" et mode "fermeture de phase" , **caractérisé en ce que,** pendant une mise en service, on place ledit variateur (12) en mode "ouverture de phase", on alimente la charge (10) par ledit variateur en le commandant pour qu'il fonctionne à un régime bas prédéterminé, puis, lorsque ledit régime bas est établi, on surveille l'apparition éventuelle de surtensions (E8) pendant un intervalle de temps donné et on pilote ledit variateur pour qu'il passe en mode de fonctionnement à fermeture de phase si un taux excessif de surtensions a été détecté pendant ledit intervalle de temps prédéterminé.

2. Procédé selon la revendication 1, **caractérisé en ce qu'**on compte le nombre de surtensions pendant l'intervalle de temps prédéterminé précité et qu'on passe en mode de fonctionnement à fermeture de phase (E9) si ledit nombre de surtensions pendant ledit intervalle de temps est supérieur à un nombre donné.

3. Procédé selon la revendication 2, **caractérisé en ce qu'**on passe en mode de fonctionnement à fermeture de phase lorsque le nombre de surtensions est au moins égal à un pourcentage donné du nombre de demi périodes de la tension réseau pendant ledit intervalle de temps prédéterminé.

4. Procédé selon la revendication 3, **caractérisé en ce que** ce pourcentage est de l'ordre de 50%.

5. Procédé selon l'une des revendications précédentes, **caractérisé en ce que,** à chaque commande du variateur pour que celui-ci fonctionne à un régime bas prédéterminé, on augmente progressivement le temps de conduction du ou des interrupteurs pendant une période de temps prédéterminée jusqu'à ce que ledit variateur fonctionne audit régime bas prédéterminé.

6. Procédé selon l'une des revendications précédentes, **caractérisé en ce que,** à la fin d'une phase de surveillance (E8) précitée de l'apparition éventuelle de surtensions, ladite phase n'ayant pas donné lieu à un changement de mode de fonctionnement, on augmente le temps de conduction (Tc) du ou des interrupteurs commandés d'une valeur prédéterminée jusqu'à atteindre un nouveau régime prédéterminé établi, on recommence à surveiller l'apparition éventuelle de surtensions pendant un intervalle de temps donné et on pilote (13, 15) ledit variateur (12) pour qu'il passe en mode de fonctionnement à fermeture de phase si un taux excessif de surtensions a été détecté pendant cet intervalle de temps correspondant.

7. Procédé selon la revendication 6, **caractérisé en ce qu'**il consiste à renouveler par paliers (E12) les changements de régime dudit variateur, à renouveler les phases de surveillance de l'apparition éventuelle de surtensions, jusqu'à ce que le temps de conduction (Tc) du ou des interrupteurs atteigne une valeur donnée et à maintenir ledit variateur en mode de fonctionnement à ouverture de phase si des surtensions n'ont pas été détectées en nombre suffisant pour justifier un changement de mode de fonctionnement, pour chaque régime établi précité.

8. Procédé selon l'une des revendications précédentes, **caractérisé en ce qu'**on mémorise (M) une information représentative d'un mode de fonctionnement sélectionné correspondant à une charge particulière et **en ce qu'**on sélectionne directement ce mode de fonctionnement à chaque nouvelle mise en service du variateur connecté à ladite charge particulière.

9. Procédé selon la revendication 8, **caractérisé en ce qu'**on efface ladite information représentative d'un mode de fonctionnement et **en ce qu'**on réinitialise une mise en service précitée avec surveillance de l'apparition éventuelle de surtensions.

10. Procédé selon l'une des revendications précédentes, **caractérisé en ce qu'**on surveille l'apparition éventuelle de surtensions aux bornes dudit interrupteur commandé.

11. Dispositif d'alimentation d'une charge, comprenant un variateur (12) à au moins un interrupteur commandé blocable et des moyens de sélection (13, 15) d'un mode de fonctionnement dit "ouverture de phase" ou "fermeture de phase" dudit variateur, **caractérisé en ce qu'**il comporte un détecteur (18) de surtensions, des moyens de commande du variateur pour le placer à un régime bas prédéterminé en mode "ouverture de phase", des moyens d'analyse de surtensions (13, 18) reliés audit détecteur de surtensions et des moyens de commande de changement de mode de fonctionnement (13, 15) dudit variateur.

12. Dispositif selon la revendication 11, **caractérisé en ce que** lesdits moyens d'analyse de surtensions comportent des moyens de comptage (13) de telles surtensions.

13. Dispositif selon l'une des revendications 11 ou 12, **caractérisé en ce qu'**il comporte une mémoire (M) dans laquelle on enregistre une information représentative d'un mode de fonctionnement adapté à la nature de la charge.

14. Dispositif selon l'une des revendications 11 à 13, **caractérisé en ce que** ledit détecteur de surtensions est connecté aux bornes du ou des interrupteurs commandés (11a).

## Claims

1. Method of supplying power to a load via a power modulation system including at least one controlled switch adapted to operate in either of two operating modes, namely a "reverse phase control" mode and a "forward phase control" mode, **characterised in that** said power modulation system (12) is switched on in the "reverse phase control" mode, the load (10) is supplied with power via said power modulation system, which is commanded to operate under predetermined low-load operating conditions, and then, when said low-load operating conditions are established, overvoltages (E8) are detected during a given period and the power modulation system is caused to change to the forward phase control mode if an excessive number of overvoltages is detected during said given period.

2. Method according to claim 1, **characterised in that** overvoltages are counted during said given time interval and the forward phase control operating mode (E9) is selected if said number of overvoltages detected during said period is greater than a given number.

3. Method according to claim 2, **characterised in that** the forward phase control operating method is selected if the number of overvoltages is at least equal to a given percentage of the number of half-periods of the AC voltage during said predetermined time interval.

4. Method according to claim 3, **characterised in that** said percentage is of the order of 50%.

5. Method according to one of the preceding claims, **characterised in that** each time the power modulation system is commanded to operate under predetermined low-load operating conditions the conduction time of the switch(es) is progressively increased during a predetermined period until said power modulation system is operating under said predetermined low-load operating conditions.

6. Method according to one of the preceding claims, **characterised in that** at the end of said period for detecting overvoltages (E8), if the operating mode has not been changed, the conduction time (Tc) of the controlled switch(es) is increased by a predetermined amount until new predetermined operating conditions are established, detection of overvoltages is resumed for a given period and said power modulation system (12) is caused (13, 15) to change to the forward phase control operating mode if an excessive number of overvoltages is detected during said given period.

7. Method according to claim 6, **characterised in that** operating conditions of said power modulation system change progressively (E12) and detection of overvoltages is repeated until the conduction time (Tc) of the switch(es) reaches a given value and said power modulation system remains in the reverse phase control operating mode if the number of overvoltages detected is insufficient to justify a change of operating mode for each of the established operating conditions.

8. Method according to one of the preceding claims, **characterised in that** information representative of a selected operating mode corresponding to a particular load is stored (M) and that operating mode is selected directly each time the power modulation system is started up when connected to said particular load.

9. Method according to claim 8, **characterised in that** said information representative of an operating mode is deleted and operation with detection of overvoltages is started up again.

10. Method according to one of the preceding claims, **characterised in that** overvoltages are detected at the terminals of said controlled switch.

11. Device for supplying power to a load, including a power modulation system (12) including at least one blockable controlled switch and means (13, 15) for selecting a "reverse phase control" or "forward phase control" operating mode of said power modulation system, **characterised in that** it comprises an overvoltage detector (18), control means for imposing predetermined low-load operating conditions on the power modulation system in the "reverse phase control" mode, overvoltage analysis means (13, 18) connected to said overvoltage detector and control means for changing the operating mode (13, 15) of said power modulation system.

12. Device according to claim 11, **characterised in that** said overvoltage analysis means include means for counting (13) said overvoltages.

13. Device according to claim 11 or 12, **characterised in that** it includes a memory (M) for storing information representative of an operating mode suited to the nature of the load.

14. Device according to one of claims 11 to 13, **characterised in that** said overvoltage detector is connected to the terminals of the controlled switch(es) (11a).

## Patentansprüche

1. Verfahren zur Versorgung einer Last mittels eines Dimmers mit zumindest einem kontrollierten Schalter, der entweder in dem einen oder dem anderen von zwei Betriebsmodi, die "Öffnen der Phase" und "Schließen der Phase" genannt werden, betrieben werden kann, **dadurch gekennzeichnet, dass** der Dimmer (12) während eines Inbetriebsetzens in den Modus "Öffnen der Phase" gesetzt wird, die Last (10) mittels des Dimmers versorgt wird, indem er so kontrolliert wird, dass er in einer vorbestimmten Niederbetriebsweise funktioniert, wenn dann die Niederbetriebsweise eingestellt ist, das eventuelle Auftreten von Überspannungen (E8) während einer gegebenen Zeitspanne überwacht wird und der Dimmer so gesteuert wird, dass er in den Betriebsmodus Schließen der Phase übergeht, falls während der vorbestimmten Zeitspanne ein übermäßiger Anteil an Überspannungen detektiert wurde.

2. Verfahren gemäß Anspruch 1, **dadurch gekennzeichnet, dass** die Anzahl an Überspannungen während der vorgenannten vorbestimmten Zeitspanne gezählt wird, und dass in den Betriebsmodus Schließen der Phase (E9) übergegangen wird, wenn die Anzahl an Überspannungen während der Zeitspanne eine gegebene Anzahl übersteigt.

3. Verfahren gemäß Anspruch 2, **dadurch gekennzeichnet, dass** in den Betriebsmodus Schließen der Phase übergegangen wird, wenn die Anzahl an Überspannungen zumindest gleich einem gegebenen Prozentsatz der Anzahl an Halbperioden der Netzspannung während der vorbestimmten Zeitspanne ist.

4. Verfahren gemäß Anspruch 3, **dadurch gekennzeichnet, dass** der Prozentsatz im Bereich von 50% liegt.

5. Verfahren gemäß einem der vorausgegangenen Ansprüche, **dadurch gekennzeichnet, dass** bei jeder Kontrolle des Dimmers, damit dieser in einer vorbestimmten Niederbetriebsweise funktioniert, nach und nach die Stromführungsdauer des oder der Schalter während einer vorbestimmten Zeitspanne gesteigert wird, bis dass der Dimmer in der vorbestimmten Niederbetriebsweise funktioniert.

6. Verfahren gemäß einem der vorausgegangenen Ansprüche, **dadurch gekennzeichnet, dass** am Schluss der vorgenannten Überwachungsphase (E8) des eventuellen Auftretens von Überspannungen, wobei in dieser Phase keine Änderungen des Betriebsmodus stattgefunden haben, die Stromführungsdauer (Tc) des oder der mit einem vorbestimmten Wert kontrollierten Schalter gesteigert wird, bis dass eine neue stabile Betriebsweise erreicht wird, erneut das eventuelle Auftreten von Überspannungen während einer gegebenen Zeitspanne überwacht wird und der Dimmer (12) so gesteuert (13, 15) wird, dass er in den Betriebsmodus Schließen der Phase übergeht, wenn während dieser entsprechenden Zeitspanne ein übermäßiger Anteil an Überspannungen detektiert wurde.

7. Verfahren gemäß Anspruch 6, **dadurch gekennzeichnet, dass** es daraus besteht, stufenweise (E12) die Änderungen der Betriebsweise des Dimmers zu erneuern, die Überwachungsphasen des eventuellen Auftretens von Überspannungen zu erneuern, bis dass die Stromführungsdauer (Tc) des oder der Schalter einen gegebenen Wert erreicht und den Dimmer in dem Betriebsmodus Öffnen der Phase zu halten, wenn Überspannungen nicht in einer Anzahl detektiert wurden, die ausreicht, um eine Änderung des Betriebsmodus zu rechtfertigen, für jede vorgenannte eingestellte Betriebsweise.

8. Verfahren gemäß einem der vorausgegangenen Ansprüche, **dadurch gekennzeichnet, dass** eine Information gespeichert (M) wird, die für einen Betriebsmodus repräsentativ ist, der entsprechend einer bestimmten Last gewählt wurde, und **dadurch**, dass dieser Betriebsmodus bei jedem Inbetriebsetzen des Dimmers, der mit der bestimmten Last verbunden ist, unmittelbar gewählt wird.

9. Verfahren gemäß Anspruch 8, **dadurch gekennzeichnet, dass** die Information, die für einen Betriebsmodus repräsentativ ist, gelöscht wird, und **dadurch**, dass ein vorgenanntes Inbetriebsetzen mit Überwachung des eventuellen Auftretens von Überspannungen zurückgesetzt wird.

10. Verfahren gemäß einem der vorausgegangenen Ansprüche, **dadurch gekennzeichnet, dass** das eventuelle Auftreten von Überspannungen an den Klemmen des kontrollierten Schalters überwacht wird.

11. Vorrichtung zur Versorgung einer Last, die einen Dimmer (12) mit zumindest einem abschaltbaren kontrollierten Schalter und Mittel (13, 15) zum Auswählen eines Betriebsmodus des Dimmers, nämlich "Öffnen der Phase" und "Schließen der Phase", aufweist, **dadurch gekennzeichnet, dass** sie einen Detektor (18) für Überspannungen, Mittel zum Kontrollieren des Dimmers, um diesen im Modus "Öffnen der Phase" in eine vorbestimmte Niederbetriebsweise zu versetzen, Mittel (13, 18) zur Analyse von Überspannungen, die mit dem Detektor für Überspannungen verbunden sind, sowie Mittel (13, 15) zum Kontrollieren der Änderung des Betriebsmodus des Dimmers aufweist.

12. Vorrichtung gemäß Anspruch 11, **dadurch gekennzeichnet, dass** die Mittel zur Analyse von Überspannungen Mittel (13) zum Zählen der Überspannungen aufweisen.

13. Vorrichtung gemäß Anspruch 11 oder 12, **dadurch gekennzeichnet, dass** sie einen Speicher (M) aufweist, in welchem eine Information gespeichert wird, die für den an die Art der Last angepassten Betriebsmodus repräsentativ ist.

14. Vorrichtung gemäß einem der Ansprüche 11 bis 13, **dadurch gekennzeichnet, dass** der Detektor für Überspannungen mit den Klemmen des oder der kontrollierten Schalter (11a) verbunden ist.
